# EUROPEAN PATENT SPECIFICATION

(11) **EP 1 010 297 B1**
(45) Date of publication and mention of the grant of the patent: **08.03.2006**
(21) Application number: 98941435.4
(22) Date of filing: 26.08.1998
(51) Int. Cl.: H04L 12/40, H04Q 7/30, H04Q 11/04, H04J 3/16, H04B 7/26

(54) **THREE-STATE OUTPUT IN A PART OF A CROSS-CONNECTING DEVICE**
DREIZUSTANDSAUSGANG IN EINEM TEIL EINER QUERVERBINDUNGSEINRICHTUNG
SORTIE A TROIS ETATS DANS UNE PARTIE D'UN DISPOSITIF D'INTERCONNEXION

(30) Priority: 26.08.1997 FI 973505
(43) Date of publication of application: 21.06.2000
(73) Proprietor: Nokia Corporation, 02150 Espoo (FI)
(72) Inventor: YLÄ-MELLA, Jarmo, FIN-01600 Vantaa (FI)
(74) Representative: Brax, Matti Juhani
(86) International application number: PCT/FI1998/000658
(87) International publication number: WO 1999/011026

(56) References cited:
- WO-A1-94/15298
- WO-A1-94/28644
- WO-A1-95/01015

## Description

The invention relates in general to cross-connects which have interfaces to an external communications system, wherein each interface is controlled by an internal control circuit in the cross-connect. In particular the invention relates to devices of said nature, in which an individual interface can be controlled by at least two control circuits alternative to one another.

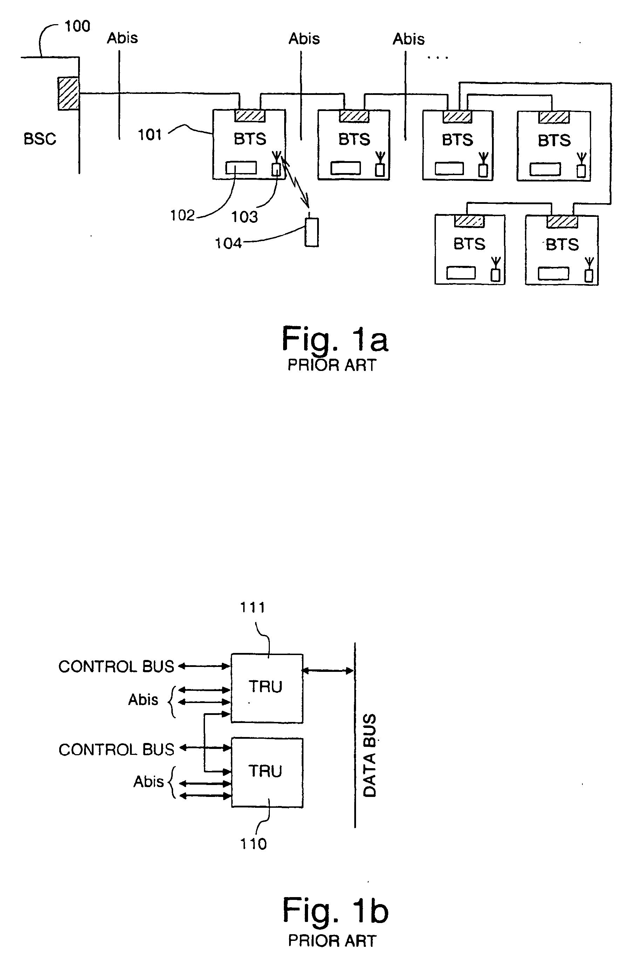

Fig. 1 a shows a base station network in a cellular radio system, comprising a base station controller 100 (BSC) and a plurality of base transceiver stations 101 (BTS). The base station controller 100 is further connected to a mobile switching center, which is not shown. To enable transmission of data between them, the base station controller 100 and base transceiver stations 101 are interlinked through a plurality of connections which constitute a so-called transmission system in the base station network. The standards for a cellular radio system such as the Global System for Mobile Telecommunications (GSM), for example, usually do not specify the transmission method to be used in the base station network, except for defining the functions that the transmission method has to be able to realize. In GSM, the interface between two base transceiver stations or a base transceiver station and the base station controller, as defined in the standards, is called the Abis interface. The transmission method may comprise e.g. a 2-Mbit/s or 1.5-Mbit/s PCM connection (Pulse Coded Modulation; ITU-T G.703 and G.704), SDH connection (Synchronous Digital Hierarchy; ITU-T G.774.03), ATM connection (Asynchronous Transfer Mode; ETS 300 371), ISDN connection (Integrated Services Digital Network), or a HDSL connection (High Density Digital Subscriber Line). The physical connection may comprise an ordinary copper wire, optical cable or a microwave radio link.

In the base transceiver stations and base station controller of the system depicted in Fig. 1a connection to the transmission system is realized through a cross-connect 102. A cross-connect 102 in a base transceiver station may comprise one or more transmission units (TRU). Cross-connecting means that the incoming data, which are arranged in frames, can be connected to the outgoing direction in the device realizing the cross-connecting such that the location of the data bits in the frames can be altered. The base transceiver station cross-connect "drops" certain bits and time slots in the transmission system frame to the base transceiver station, i.e. directs data concerning that particular base transceiver station, which arrive in certain time slots, to the base transceiver station and, on the other hand, associates the data leaving the base transceiver station in the direction of the base station controller with certain time slots allocated to that base transceiver station. The cross-connect may also perform summing, multiplication or other operations on the incoming data before the data are connected to the outgoing direction. When the cross-connect is placed either in the same equipment rack with the base transceiver station or in its immediate vicinity, the base transceiver station constitutes a compact unit and the base station network can be easily modified and expanded.

The transmission capacity allocated to one base transceiver station depends on how many TRX (Transmit/Receive) units 103 it contains. The TRXs constitute a radio interface to terminal equipment 104, and the number of TRX units determines how many simultaneous speech or data connections the base transceiver station can handle. Different parts of the base station network may also require different amounts of transmission capacity depending on the base station network topology. In a tree-like base station network the highest capacity is required of connections near to the base station controller.

At its simplest a transmission system comprises a so-called point-to-point connection where a given GSM base transceiver station is in direct contact with the base station controller and through the latter to a switching center. However, in the case of a 2-Mbit/s PCM, for example, the traffic capacity required by a base transceiver station having one TRX is quite small compared to the whole transmission band. Typically, two and a half time slots in a PCM frame (6 to 8 voice channels and signalling), or 160 kbit/s, are reserved for one TRX. Therefore, a point-to-point connection often wastes capacity and becomes expensive. On the other hand, the use of existing ISDN connections for point-to-point connections may be an alluring idea. Network back-up can be implemented using redundant point-to-point connections.

The transmission band can be utilized more efficiently by chaining base transceiver stations (so-called multidrop chain). In the chain, several base transceiver stations share, on a time division basis, the same transmission medium, thus better utilizing the connection capacity. The integrated cross-connecting function in the base transceiver station really becomes useful when the time slot arrangements can be made within the base transceiver station.

Loop networks are used for network back-up. Base transceiver stations are looped together so that there exists at all times a transmission connection in both directions of the loop from each base transceiver station to the BSC. Normally, one of the connections is active. Network monitoring is realized using status bits, or so-called pilot bits, which each base transceiver station sends in both transmission directions in the loop. A change in the state of a pilot bit indicates a network fault, at which point cross-connects in base transceiver stations switch over to the back-up connection. Network synchronization data are also sent using status bits of their own. A switchover as quick as possible enables network operation without disconnected calls even in fault situations. A GSM call can tolerate a 500-ms break in the transmission connection without disconnecting the call proper.

Fig. 1b shows a prior-art cross-connect in a GSM base transceiver station. It has two separate transmission units 110 and 111. Both transmission units have an "outbound" Abis interface according to the GSM standards, i.e. an interface to either the base station controller or another base transceiver station (not shown). In addition, both transmission units have an administrative connection to the base station controller. One of the transmission units is also connected to the internal data bus in the base transceiver station which is used in sending the downlink data associated with the voice and signalling connections handled by the base transceiver station to the TRX units (not shown) of the base transceiver station, and, correspondingly, the uplink data from the TRX units to the base station controller. In the prior-art implementation the transmission units 110 and 111 in the cross-connect are wholly separate and they both have internal cross-connecting buses of their own. The transmission units are interconnected through the Abis interface as shown in Fig. 1b.

In future cellular radio systems the average cell size will be smaller and, hence, the number of cells greater than today so that transmission systems shall be capable of handling more base transceiver stations, and network topologies and cross-connections will be more complex than now. The operator providing the transmission medium will not necessarily be the same as the operator running the cellular radio system, so the latter must be able to realize the transmission between base transceiver stations and base station controllers as advantageously and efficiently as possible, using the various transmission possibilities available.

Known prior art publications that generally concern switching technology are e.g. WO-A1-9428644 and WO-A1-9415298. Of these, the former describes switching a faulty transmitter circuit off by e.g. disabling its output buffers so that they assume a high-impedance state. The latter prior art publication describes the use of three-state buffers to ensure disturbance-free operation of a bus having a number of parallel devices coupled thereto.

An object of this invention is to provide a new kind of transmission unit for a base transceiver station in a cellular radio system, which transmission unit outperforms prior-art devices and uses space more efficiently and is easily adaptable to different transmission environments.

The objects of the invention are achieved by decentralizing the cross-connecting function into different parts of the modular transmission unit, which parts are included in the transmission unit according to the transmission environment of the base transceiver station so that each part realizes an interface between the transmission unit and a given transmission medium. Between the parts there is a cross-connecting bus the frame structure of which comprises numbered blocks. The instructions of the processor carrying out the cross-connections contain block numbers, and the block numbers that do not refer to blocks in the frame structure can be used for other control purposes.

The cross-connect according to the invention comprises a cross-connecting processor, control memory, data memory and a plurality of transmitter interfaces. The cross-connecting processor is arranged so as to read instructions from the control memory and, in response to the reading of a certain first instruction from the control memory, to read certain data from the data memory and connect that data to a certain transmitter interface. The cross-connect is characterized in that said cross-connecting processor is arranged so that in response to the reading of a certain second instruction from the control memory it sets said transmitter interface to a high-impedance state, which second instruction contains a certain first block number that does not indicate a block in the frame structure of the cross-connecting bus the cross-connecting processor sets a certain transmitter interface to a high-impedance state.

The invention is also directed to a method for controlling a cross-connect. The method according to the invention is characterized in that it comprises phases in which
- certain numbered blocks in the frame structure of the cross-connecting bus are allocated to cross-connect parts that write to the cross-connecting bus,
- each instruction stored in the control memory contains the number of the block in the frame structure of the cross-connecting bus from which the cross-connecting processor is to connect data in response to the reading of the instruction, and
- in response to the reading of an instruction which contains a certain first block number that does not indicate a block in the frame structure of the cross-connecting bus the cross-connecting processor sets a certain transmitter interface to a high-impedance state.

In the inventional structural solution the cross-connection and the functions required by the transmission connections are implemented modularly by decentralizing them into several parts which in this patent application are called transmission units. Decentralization is to be understood such that a single transmission unit can establish all transmission connections of a base transceiver station but units can be added according to capacity requirements so that they function as a whole. The cross-connection is shared by the transmission units through a parallel bus in the so-called motherboard, which bus interconnects the transmission units and is advantageously backed up for reliability. From the point of view of base station control the transmission units constitute one controllable whole. Each transmission unit realizes a certain type of standard transmission interface.

As the amount of GSM traffic increases there also emerges a need to have different transmission interfaces in one and the same base transceiver station. Therefore, the new base station solution can use transmission units of many different types. Within a transmission unit, a given first part realizes the transmission interface and converts the received data, which are to be cross-connected, from the format used in the transmission system to the internal format used in the cross-connect. The data are written in that format to the cross-connecting bus interconnecting the transmission units. The other parts of the transmission unit realize advantageously at least cross-connection, unit control, synchronization with other transmission units and interfaces to the base station motherboard. A transmission unit may comprise one or more printed circuit boards. Hereinafter, the term "special part" refers to parts realizing a transmission interface and the term "common part" refers to the cross-connecting and bus interface block. In addition to the functions mentioned above, a transmission unit may include other functional blocks, too.

The special part in the transmission unit adapts the cross-connect in the base transceiver station to the base station network's transmission system, which may be a PCM, HDSL or ISDN system, for example. Advantageously the special part may also comprise adapter circuits for different physical transmission media such as copper wire, optical cable or radio link.

Between the common parts of transmission units the data to be cross-connected travel in frames on the cross-connecting bus. Each common part includes a switching circuit with a data memory to which all data on the cross-connecting bus are written one frame at a time. The switching circuit includes a cross-connecting processor which reads instructions from the control memory and data to be cross-connected from the data memory as defined by the instructions. Especially the instructions indicate the block of the stored frame from which data should be read at each particular time. If the instruction contains a block number which has no counterpart in the frame structure of the cross-connecting bus the cross-connecting processor will do something else, say, set one of the transmitter interfaces leading to the special part of the transmission unit to a high-impedance state.

The invention will now be described in more detail with reference to the preferred embodiments presented by way of example and to the accompanying drawings wherein
- Fig. 1a: shows a known base station network,
- Fig. 1b: shows a known cross-connect in a base transceiver station,
- Fig. 2: shows a cross-connect in which the invention can be applied,
- Fig. 3: shows in more detail part of Fig. 2,
- Fig. 4: shows in more detail another part of Fig. 2,
- Fig. 5: shows an alternative to the part shown in Fig. 4,
- Fig. 6: shows a prior-art method for achieving three-state outputs in an apparatus according to Fig. 5, and
- Fig. 7: shows the method according to the invention for achieving three-state outputs in an apparatus according to Fig. 5.

Like elements in the drawings are denoted by like reference designators.

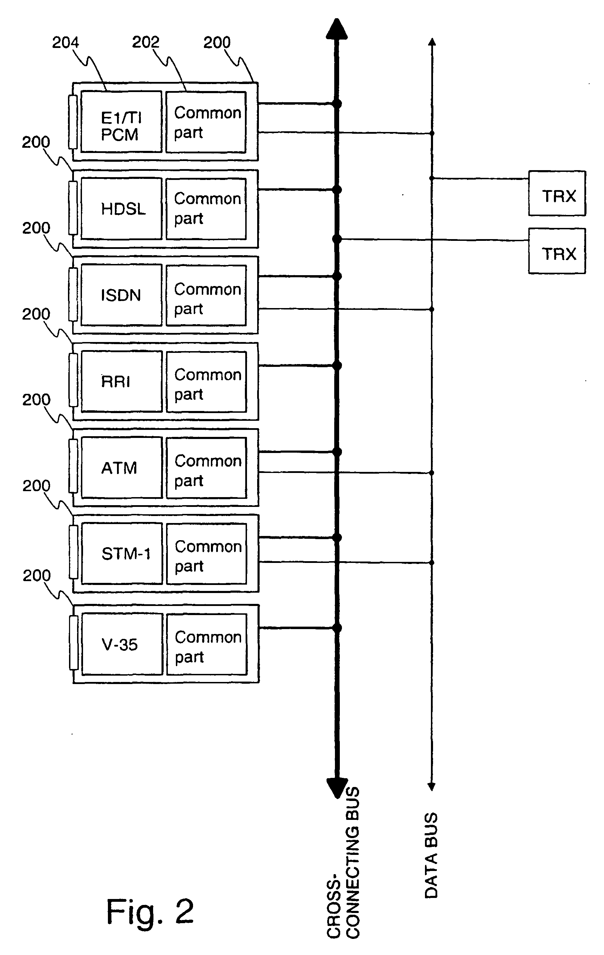

Fig. 2 shows an example of the new structure for the cross-connect in a base transceiver station. The cross-connect comprises at least one transmission unit 200. It may also have more transmission units depending on the desired quality and quantity of the transmission connections. Each transmission unit 200 comprises a common part 202 and special part 204. In a preferred embodiment each transmission unit is realized on a circuit board containing the necessary physical interfaces and functional blocks required by the common part 202 and special part 204. The transmission units are electrically coupled to the internal doubled cross-connecting bus of the base transceiver station. The transmission units may also be coupled to the data bus used by the transmitter/receiver units, or TRXs, of the base transceiver station. In a typical embodiment, where the TRX units of the base transceiver station are connected to the data bus, at least one transmission unit has to be coupled to the data bus to enable data communications between the TRX units and transmission connections outside the base transceiver station via the transmission units. In other embodiments of the invention the TRX units may also be coupled to the cross-connecting bus.

In addition to the cross-connecting bus and data bus shown in Fig. 2 the base transceiver station may also include other buses for controlling and synchronizing the operation of the transmission units. In such an embodiment the transmission units are coupled to those buses, too.

The special part 204 in each transmission unit 200 has at least one bi-directional external transmission connection 206 which may be e.g. a PCM, SDH, ATM, ISDN, HDSL or some other connection. The special part, which is of RRI (Radio Relay Interface) type, is advantageously directly connected to the outside unit of the microwave radio in the base transceiver station. In one cross-connect the external transmission connections in the special parts of the transmission units may all be identical or they may be different. In addition, a transmission unit may have interfaces for two or more types of transmission connections. Data traffic between the special part 204 and common part 202 is preferably substantially similar in all transmission units independent of the type of the external transmission connection. An advantageous solution is to provide N standard-capacity (say, 2.048 Mbit/s) connections between the special part and common part, where N is chosen such that the transmission capacity between the special part and common part at least equals the combined capacities of the transmission connections coupled to the special part.

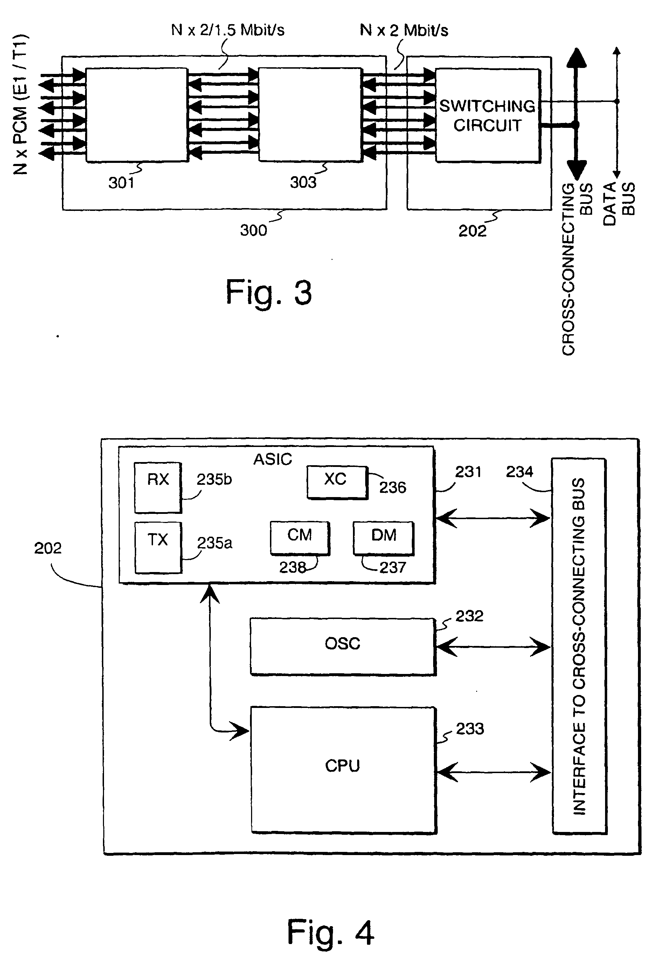

Fig. 3 shows in more detail a special part 300 of a transmission unit in a cross-connect according to the invention, which special part is intended for the transmission and reception of a PCM signal. It has an N-channel line interface circuit 301 which, when receiving, is adapted to the received signal level and extracts and regenerates timing information from the data. Depending on the application, the line impedance may be 75 ohms, 120 ohms (E1) or 100 ohms (T1). When transmitting, the line interface circuit 301 adapts the data to the transmission medium, which is a coaxial cable or twisted-wire pair. The transmission line is logically terminated by an N-channel framer circuit 303. When receiving, it decodes the line coding (e.g. high density bipolar 3, HDB3; alternate mark inversion, AMI; or binary 8 zero substitution, B8ZS) and becomes locked to the frame phase by means of frame alignment words in the data stream. In addition, the framer circuit 303 includes other functions e.g. for processing overhead data; decoding the channel signalling, handling of T1 HDLC messages, processing various alarm information, etc. Finally, the special part delivers the data stream to the common part in a form in which the clock signal is separate from the data and the start of a frame is indicated using a signal of its own. In the outgoing direction the steps mentioned above are carried out in the reverse order.

Regardless of whether the transmission interface capacity is 2.048 Mbit/s (E1) or 1.554 Mbit/s (T1), the framer circuit 303 always provides an N x 2.048 Mbit/s interface to the common part. This is achieved by internal data buffering inside the framer circuit 303 and by placing the data in the E1 frame structure in connections between the framer circuit 303 and common part 202, so that if the lower-capacity T1 frame structure is used in the transmission, the "extra" time slots in the E1 frame structure are filled with pseudo-data. The same principle holds with other applications of the special part; the interface to the common part is always N x 2.048 Mbit/s.

Fig. 4 shows in simplified form the basic electrical structure of a transmission unit's common part 202. The common part comprises a cross-connecting circuit 231, which usually is an application specific integrated circuit (ASIC) and which hereinafter will be called a switching circuit. In addition, the common part comprises an oscillator 232, microprocessor 233 and a cross-connecting bus interface 234. Transmitter and receiver blocks 235a and 235b for communications with the special part are located in the switching circuit 231 which further comprises, among other things, a cross-connecting processor 236, data memory (DM) 237 and control memory (CM) 238. The data memory 237 serves as an intermediate data store where the outgoing data, i.e. data flowing from the cross-connecting bus to transmitter blocks via the switching circuit, are temporarily stored for rearrangement. The microprocessor 233 controls the operation of the entire common part.

Through the cross-connecting bus interface 234 the common part is connected to the cross-connect's cross-connecting bus whose data structure conforms to a certain bus protocol. Data on the cross-connecting bus are arranged in frames having a certain regular form. Each frame on the cross-connecting bus is stored in its turn to the data memory DM of the cross-connecting circuit 231. A cross-connecting processor XC reads data from the data memory DM e.g. one byte at a time and writes those data to transmitter blocks 235a which lead to the special part of the transmission unit. A term called granularity defines the smallest amount of data that can be independently managed in a write operation. If the granularity is one bit, it means that each bit read from the data memory DM and written to transmitter blocks 235a can be controlled independent of other bits. Instruction words read from the control memory CM determine the order in which the data read from the data memory DM are written to transmitter blocks 235a.

A GSM call according to the prior art requires a 16-kbit/s capacity in the transmission system, corresponding to two bits in a PCM transmission system frame (according to G.703 and G.704 standards, PCM frames are repeated 8000 times a second in the transmission system so that one bit per frame corresponds to a capacity of 8 kbit/s). However, in the cross-connect according to the invention it is advantageous to prepare for the so-called half-rate GSM connections, each of which represents a transmission capacity of just 8 kbit/s. Since cross-connects have to be able to handle these connections independent of each other and, furthermore, since it is advantageous to prepare for the channel associated signalling (CAS) according to standards G.703 and G.704 in cross-connects, the granularity has to be one bit.

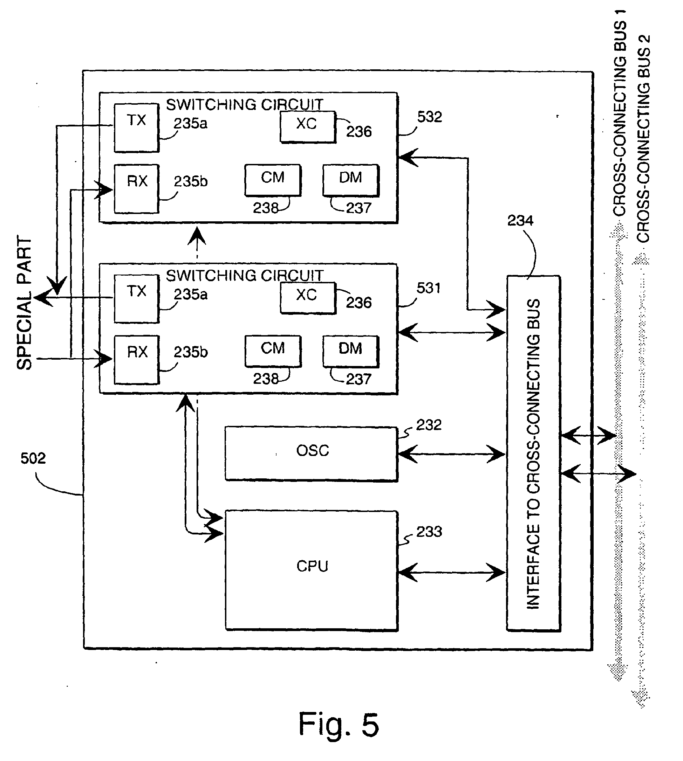

Fig. 5 shows in simplified form the basic electrical structure of the common part 502 of a second transmission unit. In this case the common part comprises two parallel cross-connecting circuits 531 and 532 which fundamentally are the same kind of ASICs, i.e. switching circuits, as those described above, referring to Fig. 4. Apart from the two switching circuits the common part shown in Fig. 5 is identical with that of Fig. 4, i.e. it comprises an oscillator 232, microprocessor 233 and a cross-connecting bus interface 234. The latter is connected to both of the switching circuits so that the frames on the cross-connecting bus can be written to the data memories of both switching circuits. Both the first 531 and the second 532 switching circuits comprise transmitter and receiver blocks 235a and 235b for communicating with the special part. The data lines from transmitter blocks 235a unite before the special part. In addition, the switching circuits 531 and 532 comprise, among other things, a cross-connecting processor 236, data memory (DM) 237 and control memory (CM) 238.

In the case depicted by Fig. 5 both switching circuits 531 and 532 read the data, which is to be cross-connected, from the same cross-connecting bus. It is however possible that in a common part that comprises two switching circuits, the switching circuits read the data from different cross-connecting buses if the cross-connect in question comprises more than one cross-connecting bus. Additionally, an embodiment of the invention can be disclosed in which the circuit corresponding to the common part comprises, in parallel with the circuit that corresponds to the switching circuit and carries out the cross-connections proper, another circuit which produces data from an arbitrary source and has at least one transmitter interface coupled together with a transmitter interface in the circuit carrying out the cross-connections proper. The invention is fully applicable to such circuits as well.

In the case depicted by Fig. 5 both switching circuits 531 and 532 cannot simultaneously write a given bit to a data line leading to a special part. When a first switching circuit 531 writes to the data line in question, the transmitter block 235a connected to that data line in a second switching circuit 532 has to be in the so-called high-impedance state. An output which can be in the logical state 0, logical state 1 or in the high-impedance state, is called a three-state output. To make it easier to understand the invention it will be next briefly described how the reading of the control memory affects in general the operation of the cross-connecting processor and how the data are arranged in the data memory.

The cross-connecting processor reads the control memory cyclically in synchronism with the outgoing frame phase. The contents of each instruction read from the control memory are interpreted, i.e. the instruction type is found out. Depending on the switching type specified by the instruction, data memory is read from one or more memory locations indicated by the control word. The reading of control and data memory is advantageously realized in a "pipeline" fashion, i.e. as the data indicated by the previous instruction are read from the data memory, a new instruction word is already at the same time being read from the control memory: Various operations are possibly carried out on the data read from the data memory, whereafter the data are taken in parallel form to the switching circuit's transmitter blocks.

The data in the data memory come from the cross-connecting bus which uses a certain frame structure. According to a preferred embodiment the cross-connecting bus frame comprises 57 blocks, 56 of which are used for transferring data to be cross-connected, and one block is used for the transfer of the cross-connect's internal control information. Each block, which is used for transferring data to be cross-connected, comprises 32 bytes of data, each byte comprising eight bits. To avoid overlapping read and write operations the data memory has two identical one-frame halves so that the cross-connecting processor reads data from a frame stored in one half while at the same time the next frame from the cross-connecting bus is being written to the other half.

An instruction read from the control memory comprises parts so that a first part indicates to the cross-connecting processor the instruction type, a second part indicates the data memory block from where the cross-connecting processor has to read data, a third part specifies a time slot in the block, and a fourth part specifies a bit in the time slot. In an embodiment that has proven advantageous the instruction type is indicated using the two most significant bits of the 16-bit instruction word, the block is indicated using the six next most significant bits, the time slot is indicated using the five next most significant bits, and the bit is indicated using the three least significant bits. Since the six bits used for indicating the block could indicate up to 64 blocks and the preferred cross-connecting bus frame structure only comprises 54 blocks, the extra block numbers can be used to create instructions that define operations which are not directed to any frame block read from the cross-connecting bus and stored in the data memory.

The address of the instruction word, i.e. its location in the control memory, indicates the transmitter block (i.e. transmitter interface) and its time slot which are affected by the operation defined by the instruction word and also the running number of the instruction word in the sequence of instruction words directed to that time slot. As the cross-connecting processor sequentially reads instruction words from the control memory, it directs the operations defined by the instruction words to each transmitter block in its turn. More detailed information about the use of the control memory and structure of instruction words is disclosed in patent application "Instruction architecture of cross-connecting processor" filed at the same time with this patent application by the same applicant and later published as EP 1 010 299.

To realize a three-state output in the common part of a cross-connect shown in Fig. 5 it is specified that a certain extra block number corresponds to setting that particular transmitter interface to the high-impedance state. If the block number is indicated using six bits in the instruction word and block numbers 0 through 53 are used to indicate the 54 frames of the cross-connecting bus frame structure, block numbers 54 through 63 are left unused. It can be specified that block number 61, for example, in a given instruction word means that the transmitter interface, with which the instruction word is associated according to its address, must be set to the high-impedance state in the time slot with which the instruction word is associated according to its address. Depending on its type the instruction word may pertain to a whole transmitter interface time slot or its part. In that case, the setting to the high-impedance state is also directed to either the time slot or its part.

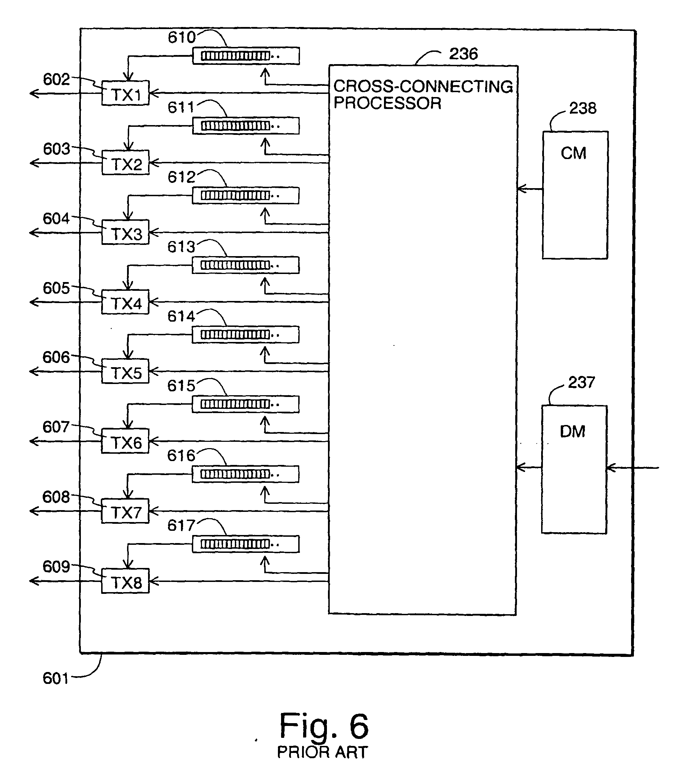

Realization of three-state outputs according to the prior art would require that the cross-connecting ASIC 601 had, in accordance with Fig. 6, a status register 610-617 per each transmitter interface 602-609, each status register having as many bit positions as there are bits in the frame structure 618 between the common part and special part (the G.703/G.704 frame structure described above as a preferred embodiment has 256 bits). Each transmitter interface 602-609 would observe its own status register 610-617 bit by bit, locked to the transmission of the frame between the common part and special part, and would set itself to the high-impedance state for the duration of the bits in the frame between the common part and special part that had the corresponding bit value in the status register.

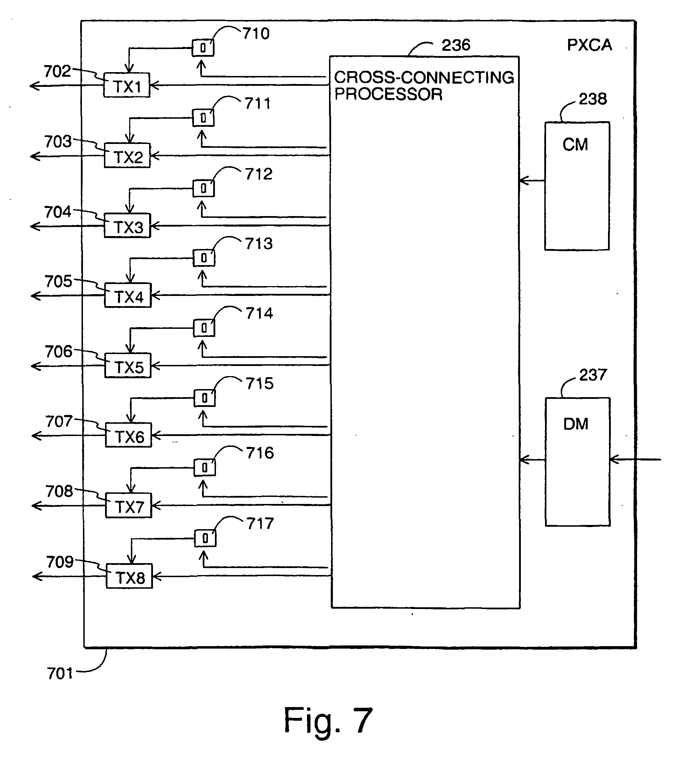

Using the solution according to the invention, schematically shown in Fig. 7, the switching circuit 701 has preferably just one 1-bit status register 710-717 per transmitter interface 702-709, and the bit value in each status register determines whether or not the corresponding transmitter interface shall be in the high-impedance state. For simplicity, the cross-connecting ASICs in Figs. 6 and 7 are shown with just the cross-connecting processor, transmitter interfaces and the associated registers, control memory and the data memory; it is obvious that the circuit includes other functional blocks, too. The cross-connecting processor 236 may change the value in each register 710-717 after having read from the control memory 238 an instruction word directed to the transmitter interface 702-709 in question. Each transmitter interface 702-709 reads its own one-bit status register 710-717 at each transmitted bit and sets itself to the high-impedance state upon finding the appropriate value in the status register. Since the register is so small, the cross-connecting ASIC becomes significantly simpler. If just one register bit per transmitter interface is needed instead of 256 bits, the savings in the ASIC implementation is about 6000 logic gates per transmitter interface.

Fig. 7 assumes that the cross-connecting processor 236 writes the cross-connected data to transmitter interfaces 702-709 one bit at a time, i.e. serially. However, another embodiment of the invention can be disclosed in which the cross-connecting processor writes the cross-connected data to the transmitter interfaces parallely eight (or 16 or 32) bits at a time and each transmitter interface carries out a parallel-to-serial conversion on the received data before sending it further. In such a case the present invention would be applied to the three-state coding in such a manner that for each transmitter interface the cross-connecting ASIC would have, instead of the one-bit register described above, a register that had as many bits as there are parallel bits written at a time to the transmitter interface (i.e. 8, 16 or 32 bits). In that case, the number of gates needed in the ASIC implementation would be somewhat higher than in the one-bit register solution depicted in Fig. 7, but yet significantly smaller than in the prior-art arrangement depicted in Fig. 6. Furthermore, the invention does not require that a transmitter interface send the received data forward in serial form, but in certain applications the circuit units like the common part and special part described above could communicate through parallel interfaces as well.

## Claims

1. A cross-connect device which comprises a cross-connecting processor (236), control memory (238), data memory (237) and a plurality of transmitter interfaces (702, 703, 704, 705, 706, 707, 708, 709) and in which the cross-connecting processor (236) is arranged to read instructions from the control memory (238) and, in response to the reading of a first instruction from the control memory (238), to read data from the data memory (237) and deliver said data to a transmitter interface (702, 703, 704, 705, 706, 707, 708, 709), **characterized in that** said cross-connecting processor (236) is arranged to set said transmitter interface (702, 703, 704, 705, 706, 707, 708, 709) to a high-impedance state in response to the reading of a second instruction from the control memory, which second instruction includes a first block number that does not indicate any block in a frame structure of a cross-connecting bus used to transfer data, which are to be cross-connected, between parts of the cross-connect device.

2. The cross-connect device of claim 1, **characterized in that** it comprises a common data line and two parallel circuit entities (531, 532) both of which include a plurality of transmitter interfaces (235a), of which at least one transmitter interface (235a) in each circuit entity (531, 532) is connected to said common data line and adapted to write to said common data line.

3. The cross-connect device of claim 1, **characterized in that** it comprises one register (710, 711, 712, 713, 714, 715, 716, 717) per transmitter interface (702, 703, 704, 705, 706, 707, 708, 709) in order to determine whether the transmitter interface (702, 703, 704, 705, 706, 707, 708, 709) should be in the high-impedance state and, in response to the reading of said second instruction from the control memory (238), said cross-connecting processor (236) is arranged to set a value indicating the high-impedance state into the register (710, 711, 712, 713, 714, 715, 716, 717) that corresponds to the transmitter interface (702, 703, 704, 705, 706, 707, 708, 709) in question.

4. A method for controlling a cross-connect device which comprises
- a cross-connecting processor (236), control memory (238), data memory (237), a plurality of transmitter interfaces (702, 703, 704, 705, 706, 707, 708, 709), and
- a cross-connecting bus to transfer data, which are to be cross-connected, between parts of the cross-connect device
and in which the cross-connecting processor (236) is arranged to read instructions from the control memory (238) and, in response to the reading of a first instruction from the control memory (238), to read data from the data memory (237) and deliver said data to a transmitter interface (702, 703, 704, 705, 706, 707, 708, 709),
**characterized in that** it comprises phases in which
- numbered blocks in the frame structure of the cross-connecting bus are allocated to parts of the cross-connect device that write to the cross-connecting bus,
- instructions stored in the control memory (238) are created such that they include a block number which indicates the number of the block in the cross-connecting bus frame structure from which the cross-connecting processor (236) has to read data in response to the reading of the instruction in question, and
- in response to the reading, from said control memory (238), of an instruction which includes a first block number that does not indicate any block in the cross-connecting bus frame structure, the cross-connecting processor (236) sets a transmitter interface (702, 703, 704, 705, 706, 707, 708, 709) to a high-impedance state.

5. The method of claim 4, **characterized in that** to set a transmitter interface (702, 703, 704, 705, 706, 707, 708, 709) to the high-impedance state in response to the reading of an instruction that includes a first block number which does not indicate any block in the cross-connecting bus frame structure, the cross-connecting processor (236) sets a value indicating a high-impedance state into a register (710, 711, 712, 713, 714, 715, 716, 717) corresponding to the transmitter interface (702, 703, 704, 705, 706, 707, 708, 709) in question.

## Patentansprüche

1. Ein Cross-Connect-Gerät (Rangierverbindungsgerät), umfassend einen Rangierverbindungsprozessor (236), einen Steuerspeicher (238), einen Datenspeicher (237) und eine Mehrzahl von Sendeschnittstellen (702, 703, 704, 705, 706, 707, 708, 709), und bei dem der Rangierverbindungsprozessor (236) darauf eingerichtet ist, Anweisungen aus dem Steuerspeicher (238) zu lesen und in Antwort auf das Lesen einer ersten Anweisung aus dem Steuerspeicher (238) Daten aus dem Datenspeicher (237) zu lesen und diese Daten an eine Sendeschnittstelle (702, 703, 704, 705, 706, 707, 708, 709) zu liefern,
**dadurch gekennzeichnet, dass**
der Rangierverbindungsprozessor (236) darauf eingerichtet ist, die Sendeschnintstelle (702, 703, 704, 705, 706, 707, 708, 709) in Antwort auf das Lesen einer zweiten Anweisung aus dem Steuerspeicher in einen hochohmigen Zustand zu versetzen, wobei die zweite Anweisung eine erste Blocknummer enthält, die nicht einen Block in einer Framestruktur eines Rangierverbindungsbusses bezeichnet, der zur Übertragung von Daten benutzt wird, die zwischen Teilen des Cross-Connect-Geräts verzweigt werden sollen.

2. Cross-Connect-Gerät nach Anspruch 1, **dadurch gekennzeichnet, dass** es eine gemeinsame Datenleitung und zwei parallele Schaltkreisentitäten (531, 532) umfasst, die beide eine Mehrzahl von Sendeschnittstellen (235a) enthalten, von denen mindestens eine Sendeschnittstelle (235a) in jeder Schaltkreisentität (531, 532) an die gemeinsame Datenleitung angeschlossen und darauf eingerichtet ist, auf die gemeinsame Datenleitung zu schreiben.

3. Cross-Connect-Gerät nach Anspruch 1, **dadurch gekennzeichnet, dass** es ein Register (710, 711, 712, 713, 714, 715, 716, 717) pro Sendeschnittstelle (702, 703, 704, 705, 706, 707, 708, 709) umfasst, um zu bestimmen, ob die sendeschnittstelle (702, 703, 704, 705, 706, 707, 708, 709) im hochohmigen zustand sein sollte, und wobei in Antwort auf das Lesen der zweiten Anweisung aus dem Steuerspeicher (238) der Rangierverbindungsprozessor (236) darauf eingerichtet wird, einen den hochohmigen Zustand anzeigenden Wert in dem Register (710, 711, 712, 713, 714, 715, 716, 717) einzustellen, das der betreffenden Sendeschnittstelle (702, 703, 704, 705, 706, 707, 708, 709) entspricht.

4. verfahren zum Steuern eines Cross-Connect-Geräts, welches umfasst :
einen Rangierverbindungsprozessor (236), einen Steuerspeicher (237), eine Mehrzahl von Sendeschnittstellen (702, 703, 704, 705, 706, 707, 708, 709) und
einen Rangierverbindungsbus zum Übertragen von Daten, die zwischen Teilen des Cross-Connect-Geräts zu verzweigen sind,
und bei dem der Rangierverbindungsprozessor (236) darauf eingerichtet ist, Anweisungen aus dem Steuerspeicher (238) zu lesen und in Antwort auf das Lesen einer ersten Anweisung aus dem Steuerspeicher (238) Daten aus dem Datenspeicher (237) zu lesen und diese an eine Sendeschnittstelle (702, 703, 704, 705, 706, 707, 708, 709) zu liefern,
**dadurch gekennzeichnet, dass** das Verfahren Phasen umfasst, in denen
nummerierte Blöcke in der Framestruktur des Rangierverbindungsbusses Teilen des Cross-Connect-Geräts zugewiesen werden, die auf den Rangierverbindungsbus schreiben,
im Steuerspeicher (238) gespeicherte Anweisungen derart erstellt werden, dass sie eine Blocknummer enthalten, die die Nummer des Blocks in der Rangierverbindungsbusframestruktur bezeichnet, von der der Rangierverbindungsprozessor (236) Daten in Antwort auf das Lesen der betreffenden Anweisung zu lesen hat, und
in Antwort auf das Lesen einer Anweisung aus dem Steuerspeicher (238), die eine erste Blocknummer enthält, die nicht einen Block in der Rangierverbindungsbusframestruktur angibt, der Rangierverbindungsprozessor (236) eine Sendeschnittstelle (702, 703, 704, 705, 706, 707, 708, 709) in einen hochohmigen Zustand versetzt.

5. Verfahren nach Anspruch 4, **dadurch gekennzeichnet, dass** zum Versetzen einer Sendeschnittstelle (702, 703, 704, 705, 706, 707, 708, 709) in den hochohmigen Zustand in Antwort auf das Lesen einer Anweisung, die eine erste Blocknummer enthält, die nicht einen Block in der Rangierverbindungsbusframestruktur bezeichnet, der Rangierverbindungsprozessor (236) einen den hochohmigen Zustand anzeigenden Wert in einem Register (710,711, 712, 713, 714, 715, 716, 717) einstellt, das der betreffenden Sendeschnittstelle (702, 703, 704, 705, 706, 707, 708, 709) entspricht.

## Revendications

1. Dispositif d'interconnexion qui comprend un processeur d'interconnexion (236), une mémoire de commande (238), une mémoire de données (237) et une pluralité d'interfaces d'émetteur/récepteur (702, 703, 704, 705, 706, 707, 708, 709) et dans lequel le processeur d'interconnexion (236) est arrangé pour lire les instructions provenant de la mémoire de commande (238) et, en réponse à la lecture d'une première instruction provenant de la mémoire de commande (238), lire les données depuis la mémoire de données (237) et délivrer lesdites données à une interface d'émetteur/récepteur (702, 703, 704, 705, 706, 707, 708, 709), **caractérisé en ce que** ledit processeur d'interconnexion (236) est arrangé pour régler ladite interface d'émetteur/récepteur (702, 703, 704, 705, 706, 707, 708, 709) à un état de haute impédance en réponse à la lecture d'une deuxième instruction provenant de la mémoire de commande, laquelle deuxième instruction comprend un premier numéro de bloc qui n'indique aucun bloc dans une structure de cadre d'un bus d'interconnexion utilisé pour transférer des données, qui doivent être interconnectées, entre des parties du dispositif d'interconnexion.

2. Dispositif d'interconnexion selon la revendication 1, **caractérisé en ce qu'**il comprend une ligne de données communes et deux entités de circuits parallèles (531, 532) qui toutes deux comprennent une pluralité d'interfaces d'émetteur/récepteur (235a), desquelles au moins une interface d'émetteur/récepteur (235a) dans chaque entité de circuit (531, 532) est connectée à ladite ligne de données communes et adaptée pour écrire vers ladite ligne de données communes.

3. Dispositif d'interconnexion selon la revendication 1, **caractérisé en ce qu'**il comprend un registre (710, 711, 712, 713, 714, 715, 716, 717) par interface d'émetteur/récepteur (702, 703, 704, 705, 706, 707, 708, 709) de façon à déterminer si l'interface d'émetteur/récepteur (702, 703, 704, 705, 706, 707, 708, 709) doit être dans l'état de haute impédance et, en réponse à la lecture de ladite deuxième instruction depuis la mémoire de commande (238), ledit processeur d'interconnexion (236) est arrangé pour régler une valeur qui indique l'état d'impédance élevée dans le registre (710, 711, 712, 713, 714, 715, 716, 717) qui correspond à l'interface de l'émetteur/récepteur (702, 703, 704, 705, 706, 707, 708, 709) en question.

4. Procéder pour commander un dispositif d'interconnexion qui comprend
- un processeur d'interconnexion (236), une mémoire de commande (238), une mémoire de données (237), une pluralité d'interfaces d'émetteur/récepteur (702, 703, 704, 705, 706, 707, 708, 709), et
- un bus d'interconnexion pour transférer des données, qui sont à interconnecter, entre des pièces du dispositif d'interconnexion
et dans lequel le processeur d'interconnexion (236) est arrangé pour lire les instructions à partir de la mémoire de commande (238) et, en réponse à la lecture d'une première instruction depuis la mémoire de commande (238), pour lire les données depuis la mémoire de données (237) et délivrer lesdites données à une interface d'émetteur/récepteur (702, 703, 704, 705, 706, 707, 708, 709), **caractérisé en ce qu'**il comprend des phases dans lesquelles
- de nombreux blocs dans la structure de cadre du bus d'interconnexion sont alloués aux pièces du dispositif d'interconnexion qui écrivent au bus d'interconnexion,
- des instructions stockées dans la mémoire de commande (238) sont créées de telles façon qu'elles comprennent un numéro de bloc qui indique le numéro du bloc dans la structure de cadre de bus d'interconnexion à partir duquel le processeur d'interconnexion (236) doit lire les données en réponse à la lecture de l'instruction en question, et
- en réponse à la lecture, depuis ladite mémoire de commande (238), d'une instruction qui comprend un premier numéro de bloc qui n'indique aucun bloc dans la structure de cadre de bus d'interconnexion, le processeur d'interconnexion (236) règle une interface d'émetteur/récepteur (702, 703, 704, 705, 706, 707, 708, 709) à un état d'impédance élevée.

5. Procédé selon la revendication 4, **caractérisé en ce que** pour régler une interface d'émetteur/récepteur (702, 703, 704, 705, 706, 707, 708, 709) à l'état d'impédance élevée en réponse à la lecture d'une instruction qui comprend un premier numéro de bloc qui n'indique aucun bloc dans la structure de cadre de bus d'interconnexion, le processeur d'interconnexion (236) règle une valeur qui indique un état d'impédance élevée dans un registre (710, 711, 712, 713, 714, 715, 716, 717) qui correspond à l'interface d'émetteur/récepteur (702, 703, 704, 705, 706, 707, 708, 709) en question.
